Europäisches Patentamt

European Patent Office

Office européen des brevets

(19)

(11) Veröffentlichungsnummer: **0 166 846**

A2

(12) **EUROPÄISCHE PATENTANMELDUNG**

(21) Anmeldenummer: 85100094.3

(22) Anmeldetag: 07.01.85

(51) Int. Cl.⁴: **B 01 D 53/34**

(30) Priorität: 06.06.84 DD 263859

(43) Veröffentlichungstag der Anmeldung:
08.01.86 Patentblatt 86/2

(84) Benannte Vertragsstaaten:
AT CH DE FR IT LI NL

(71) Anmelder: VEB Zentrum für Forschung und Technologie
Mikroelektronik
Karl-Marx-Strasse
DDR-8080 Dresden(DD)

(72) Erfinder: Tiller, Hans-Jürgen
Emil-Wölk-Strasse 2
DDR-6900 Jena(DD)

(72) Erfinder: Berg, Dorothea, Dr.
O.-Devrient-Strasse 2
DDR-6900 Jena(DD)

(72) Erfinder: Fendler, Reinhard, Dr.
Waldteichstrasse 34
DDR-8101 Boxdorf(DD)

(72) Erfinder: Voigt, Reinhard
Mozartstrasse 9
DDR-5800 Gotha(DD)

(72) Erfinder: Weber, Ulf
Güterbahnhofstrasse 4
DDR-8142 Radeberg(DD)

(72) Erfinder: Helbig, Jürgen
Trachauer Strasse 28
DDR-8122 Radebeul(DD)

(72) Erfinder: Lehmann, Klaus-Jürgen
Herzogwalder Strasse 14
DDR-8038 Dresden(DD)

(74) Vertreter: Patentanwälte Beetz sen. - Beetz jun. Timpe -
Siegfried - Schmitt-Fumian
Steinsdorfstrasse 10
D-8000 München 22(DE)

(54) Vorrichtung zum Reinigen halogenhaltiger Schadstoffe.

(57) Die Erfindung betrifft eine Vorrichtung zur Reinigung halogenhaltiger Schadstoffe, insbesondere zur Reinigung von Abgasen aus Anlagen zum plasmachemischen Ätzen von Halbleitermaterialien für elektronische Bauelemente. Die Vorrichtung ist gekennzeichnet durch einen innerhalb einer im Abgasstrom zwischen einer Plasmaätzanlage und deren Vakuumsystem angeordneten Reaktionskammer vorgesehenen heizbaren Feststoffkörper, an dessen Wandung das Abgas zwangsweise vorbeigeführt wird, mit dieser reagiert und gereinigt die Reaktionskammer verläßt.

Die Reaktionskammer ist zylinderförmig aufgebaut, weist eine Kühleinrichtung sowie Mittel zur Zuführung von Spül- und Reaktionsgas auf und ist über einen abnehmbaren Flanschdeckel servicefreundlich aufgebaut.

Die Vorrichtung ist zur Reinigung chlorhaltiger Abgase einsetzbar, durch den Wechsel des Feststoffkörpers können fluorhaltige Abgase gereinigt werden.

Vorrichtung zur Reinigung halogenhaltiger Schadstoffe

Die Erfindung betrifft eine Vorrichtung zur Reinigung halogenhaltiger Schadstoffe, insbesondere zur Reinigung von Abgasen aus Anlagen zum plasmachemischen Ätzen von Halbleitermaterialien.

Die Vorrichtung ist vorzugsweise in der Halbleiterindustrie einsetzbar, wobei deren Verwendung auf den technischen Gebieten möglich ist, in denen halogenhaltige Schadstoffe zum Schutz der Umwelt sowie zur Vermeidung von Korrosionsschäden beseitigt werden müssen.

Bei der Herstellung von Halbleiterbauelementen werden durch verschiedene Verfahren dünne Schichten aufgetragen, durch nachgeordnete Verfahrensschritte in ihrer Eigenschaft verändert und während der Herstellung der Bauelementestrukturen an bestimmten Stellen durch chemische Prozesse wieder abgetragen. Während des Prozeßablaufes entstehen zum Teil sehr giftige Abgase, die unter anderem Chlor- und Fluorverbindungen enthalten und nur in geringsten Mengen in die Atmosphäre abgegeben werden dürfen. Durch die schnelle Entwicklung der Mikroelektronik ist in zunehmendem Maß eine Steigerung der Produktion von Halbleiterbauelementen erforderlich, womit es notwendig wird, die anfallenden Abgase zu entgiften, um Schäden für die Menschen und die Umwelt zu vermeiden.

Es sind bereits Vorrichtungen zur Entgiftung/Reinigung von Abgasen bekannt, die einerseits mit Hilfe einer Waschflüssigkeit und unter Zuhilfenahme von anderen Mitteln einen Reinigungsprozeß ermöglichen. Deren Einsatz ist jedoch wegen eines hohen technischen Aufwandes kostenungünstig und unterliegt wegen der Verwendung von Laugen zum anderen zusätzlichen Sicherheitsbestimmungen. Andererseits ist bekannt, daß das Abgas unter thermischer Einwirkung in einem Reaktionsgefäß behandelt und anschließend gereinigt abgeleitet wird.

Dazu ist innerhalb eines Reaktionsgefäßes oder einer Reaktionskammer eine wendelförmige Heizeinrichtung aus Eisen oder einer Eisenverbindung vorgesehen, die direkt über Widerstandserwärmung beheizt wird. Zur Erzielung eines optimalen Reaktionsprozesses weist die Wendel einen in Abgasströmungsrichtung über ihre Länge abnehmenden Querschnitt auf. Die Abgasführung erfolgt dabei durch einen in der Nähe der durch die Reaktionskammer geführten Wendel angeordneten Einlaßstutzen in die Kammer und durch einen von diesem entfernten und nach der Wendel angeordneten Auslaßstutzen zur weiteren Abführung des behandelten Abgases. Der Reinigungsprozeß erfolgt, wenn während der Abgasdurchführung die Wendel erwärmt ist, indem sich das im Abgas enthaltene Chlor mit dem Eisen der Wendel verbindet. Das Reaktionsprodukt setzt sich als Eisenchlorid in der Reaktionskammer ab und kann dort während zyklischer Reinigungsprozesse entfernt werden.

Diese vorgeschlagene Lösung ist für den industriellen Einsatz jedoch wenig geeignet, da die zur Verfügung stehende Reaktionsfläche gegenüber der zu reinigenden Gasmenge gering ist und sich zum anderen mit fortschreitender Betriebszeit des Reaktors verringert. Für die Realisierung einer derartigen Lösung ist des weiteren ein Hochstromtransformator und eine zusätzliche Regelung für den Heizstrom erforderlich, da durch den chemischen Abtrag der elektrische Widerstand der Wendel erhöht wird. Der chemische Abtrag wiederum erfordert das Auswechseln der gesamten Heizeinrichtung, womit die Vorrichtung kostenaufwendig und materialintensiv wird.

Das Ziel der Erfindung besteht darin, die beim plasmachemischen Ätzen von Halbleitersubstraten entstehenden gasförmigen Schadstoffe so zu reinigen, daß keine chlor- oder fluorhaltigen Abgase Schäden verursachen.

Der Erfindung liegt die Aufgabe zugrunde, eine Vorrichtung zu schaffen, die es ermöglicht, die beim plasmachemischen Ätzen von Halbleitersubstraten anfallenden Abgase so zu reinigen, daß ein hoher Gasdurchlaß bei geringem Energieverbrauch möglich wird.

Die erfindungsgemäße Aufgabe wird dadurch realisiert, daß der Feststoffkörper der Reaktionskammer einer Plasmaätzanlage zur Herstellung von Halbleiterbauelementstrukturen als ein axial einseitig verschlossener Hohlkörper ausgebildet und im Gasstrom innerhalb der Reaktionskammer angeordnet ist. Innerhalb des Feststoffkörpers ist eine Heizeinrichtung vorgesehen, mit der der Feststoffkörper über elektrische Widerstandsheizung erwärmbar ist. Um den Feststoffkörper herum ist ein demselben angepaßter Strahlenschutz abstandsweise angeordnet, der wiederum von einem Stützkörper umgeben und der mit dem Gehäuse der Reaktionskammer axial verbunden ist. Im Inneren des Feststoffkörpers ist eine Öffnung für die Zuführung eines Spülgases und im Bereich der Gaszuführung ist eine Rohrleitung für ein Reaktionsgas vorgesehen. Des weiteren weist die Reaktionskammer eine Kühleinrichtung auf, die entweder als ein doppelwandiges Gehäuse mit Zu- und Abführungen für ein Kühlmedium direkt als Reaktionskammerwandung ausgebildet ist, oder eine Kühlschlange ist wendelförmig an der Außenwandung angeordnet. Die Gaseinlaßöffnung der Reaktionskammer ist axial, die Gasauslaßöffnung radial angeordnet vorgesehen.

Der Boden des Feststoffkörpers ist der inneren Öffnung des Gaseinlaßstutzens zugewandt und der offene Teil ist gegenüber einem die Reaktionskammer abdichtenden Flanschdeckel in einem geringen Abstand vorgesehen. Der Abstand zwischen dem Feststoffkörper, dem Strahlenschutz und dem Stützkörper ist mittels innerer und äußerer Stützen realisiert. Die Heizeinrichtung ist am Flanschdeckel befestigt und mit diesem in bzw. aus dem Feststoffkörper bewegbar.

Für die Reinigung chlorhaltiger Abgase besteht der Feststoffkörper aus Eisen, während für fluorhaltige Abgase ein Feststoffkörper aus Quarzglas eingesetzt ist.

Als Spülgas für den Innenraum des Feststoffkörpers ist Argon vorgesehen, als Reaktionsgas im Abgasstrom ist Sauerstoff eingesetzt.

Letztlich ist der Gasauslaßstutzen für das gereinigte Abgas an einer der Gaseinlaßöffnung entfernten Position radial an der Wandung der Reaktionskammer angeordnet.

Zur Durchführung des Reinigungsprozesses wird der zu reinigende Gasstrom mittels einer Vakuumerzeugungseinrichtung aus einer Anlage zum plasmachemischen Ätzen abgesaugt und durch den Gaseinlaßstutzen einer in der Abgasleitung angeordneten Reaktionskammer in deren Innenraum befördert. Durch die axiale Anordnung des Stützkörpers sowie des abstandsweise dazu angeordneten Strahlenschutzes wird das Abgas zwangsweise um den beheizten Feststoffkörper geführt, nachdem es mit dessen der Gaseinlaßöffnung zugewandter Bodenfläche in Berührung kam. Durch die Länge und Anordnung des Stützkörpers und Strahlenschutzes wird die volle Länge des Feststoffkörpers ausgenutzt und das Abgas wird an der Flanschdeckelseite in seiner Strömungsrichtung umgelenkt und aus dem entfernt angeordneten Abgasstutzen abgesaugt. Zur Vermeidung von Korrosionsschäden an der Heizeinrichtung ist der Innenraum des Feststoffkörpers mit Argon gespült, zur Erhöhung des Reaktionseffektes wird dem Abgas im Bereich des Gaseinlasses Sauerstoff zugeführt.

Das im Abgas enthaltene Chlor reagiert unter Wärmeeinwirkung mit dem Eisen der Wandung des Feststoffkörpers und setzt sich an der gekühlten Innenfläche der Reaktionskammer als Eisenchlorid ab.

Die Zufuhr von Sauerstoff dient dem Abbau des bei der temperaturabhängigen anteiligen Zersetzung von $CCl_4$ entstehenden Kohlenstoffes. Das in fester Form vorliegende Abprodukt ist durch Öffnen des Flanschdeckels leicht zu entfernen. Die Vorrichtung ermöglicht die vollständige Umsetzung des Chloranteiles im Abgas, während bei Einsatz eines Quarzglasfeststoffkörpers fluorhaltige Abgase gereinigt werden können.

Die Erfindung wird anhand eines Ausführungsbeispieles und einer Zeichnung, die den Schnitt durch die erfindungsgemäße Vorrichtung zeigt, näher erläutert.

Die erfindungsgemäße Vorrichtung besteht im wesentlichen aus einem im Abgasstrom einer Plasmaätzanlage zwischen der Anlage und dem Vakuumpumpsystem angeordneten, als Reaktionskammer 1 ausgebildeten, zylinderförmigen Hohlkörper, der an einer Stirnseite einen Boden 1.1 mit einer darin axial angeordneten Gaseinlaßöffnung 2 aufweist. Die Wandung der Reaktionskammer 1 ist doppelt ausgebildet und für ein Kühlmedium vorgesehen, das über einen Zufluß 4 dem Kühlraum zugeführt wird. Zur Erzielung einer ausreichenden Kühlung ist der Abfluß 4.1 an einer dem Zufluß 4 gegenüberliegenden und am weitesten entfernten Position angeordnet. Gegenüber dem Boden 1.1 ist die Reaktionskammer 1 mit einem Flanschdeckel 10 mittels Dichtring 13 und Schrauben 14 verschließbar.

Im Innern der Reaktionskammer 1 ist ein weiterer zylinderförmiger Hohlkörper axial angeordnet, der als Feststoffkörper 7 ausgebildet und einseitig mit einem Boden 1.1 verschlossen ist. Der Boden 1.1 befindet sich zum Zweck der Abgasreinigung gegenüber der inneren Öffnung der Gaseinlaßöffnung 2, während seine offene Seite in einem Abstand von dem Flanschdeckel 10 angeordnet ist. Im Innenraum des Feststoffkörpers 7 ist eine Heizeinrichtung 9 vorgesehen, deren Wendel in der Nähe des Bodens 1.1 des Feststoffkörpers 7 liegt, die Durchführungen für die elektrischen Anschlüsse befinden sich im Flanschdeckel 10, so daß beim Öffnen desselben die Heizeinrichtung 9 komplett aus dem Feststoffkörper 7 entfernt werden kann. Des weiteren ist in dem Flanschdeckel 10 eine Rohrleitung 11.2 vorgesehen, deren eine Öffnung 11.1 innerhalb des Feststoffkörpers 7 angeordnet ist, während durch die andere Seite eine Verbindung mit einer Einrichtung zur Zuführung eines Spülgases 11 hergestellt wird. Die Befestigung des Feststoffkörpers 7 erfolgt innerhalb der Reaktionskammer 1 derart, daß sich um den Feststoffkörper 7 ein als Strahlenschutz 6 ausgebildeter Hohlzylinder mittels innerer Stützen 8 auf der Wandung des Feststoffkörpers 7 abstandsweise abstützt und dieser Hohlzylinder des Strahlenschutzes 6 an seiner Außenwand und, den inneren Stützen 8 gegenüberliegend, äußere Stützen 8.1 aufweist, die mit einem weiteren Zylinder korrespondieren, der als Stützkörper 5 ausgebildet und mit der Wandung des Bodens 1.1 der Reaktionskammer 1 fest verbunden ist. Im Bereich der Gaseinlaßöffnung 2 oder direkt in dessen Gaseinlaßstutzen 2.1 ist eine weitere Öffnung vorgesehen, durch die über eine Rohrleitung 12.1 ein Reaktionsgas 12 dem Abgas zugeführt werden kann.

Für das vorliegende Ausführungsbeispiel besteht der Feststoffkörper 7 aus Eisen, als Spülgas 11 wird Argon und als Reaktionsgas 12 Sauerstoff eingesetzt. Das Spülgas 11 ist als Abschirmung für die frei im Feststoffkörper 7 angeordnete Heizwendel der Heizeinrichtung 9 zur Vermeidung von Korrosionsschäden an derselben vorgesehen.

Es ist vorteilhaft, wenn zur Vermeidung von Temperaturverlusten das Spülgas 11 vorgewärmt dem Feststoffkörper 7 zugeführt wird. Die Abführung des behandelten Abgases 3 erfolgt über einen an der Wandung der Reaktionskammer 1 angeordneten Abgasstutzen 3.1.

Im Rahmen erforderlicher zyklischer Reinigungs- und Außerbetriebsetzungsmaßnahmen wird der Flanschdeckel 10 durch Lösen der Schrauben 14 gelöst und das Eisenchlorid kann mühelos von der Wandung im Innenraum der Reaktionskammer entfernt werden. Dazu kann ebenfalls der lose mittels der Stützen 8, 8.1 im Stützkörper 5 eingelegte Feststoffkörper 7 mit dem Strahlenschutz 6 entfernt werden. An dem Feststoffkörper 7 ist deutlich die Reaktion des Chlores mit dem Eisen nachweisbar, woraus der Zeitpunkt des Austausches und die Erneuerung des Feststoffkörpers 7 abgeleitet und durchgeführt werden kann. Ebenso ist es möglich, den Verbrauch des Feststoffkörpers 7 während des Betriebes mittels Sensoren rechtzeitig signalisieren zu lassen oder den aus der Vorrichtung abgeführten Abgasstrom durch entsprechende Meßeinrichtungen zu kontrollieren. Bei einem Nachweis von Chlor oder Chloranteilen ist demzufolge der Feststoffkörper 7 verbraucht und muß zwingend ersetzt werden.

Die Vorteile der Vorrichtung ergeben sich insbesondere dadurch, daß das Chlor im Abgas von Plasmaätzanlagen vollständig umgesetzt wird und somit keine schädigenden Anteile aus den Abgasanlagen in die Umwelt abgegeben, Personen belästigt oder geschädigt und Korrosionsschäden verursacht werden.

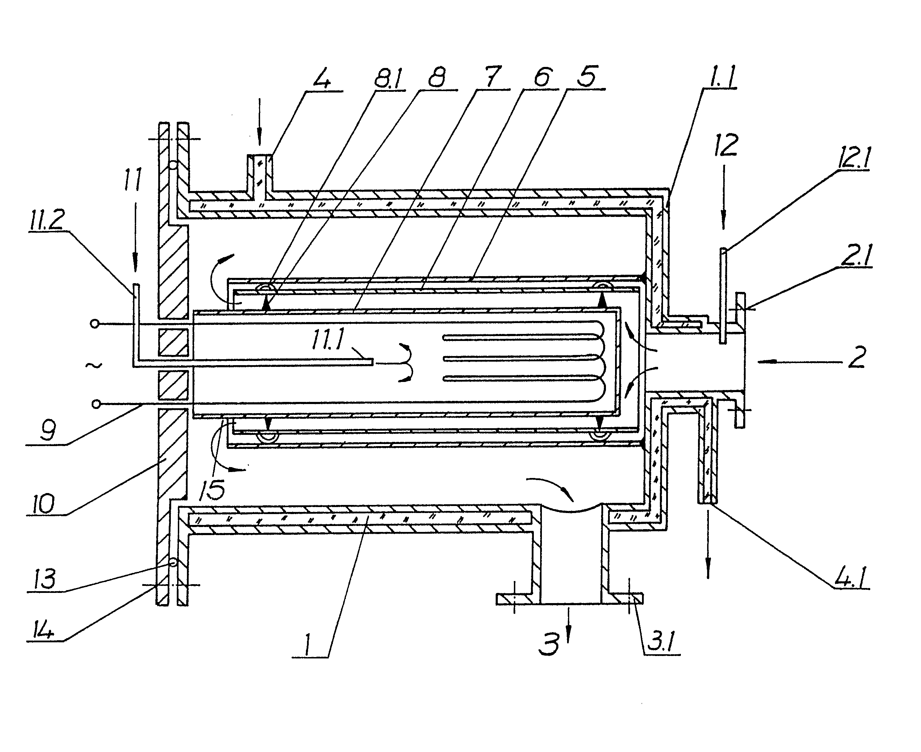

Patentanspruch

1. Vorrichtung zur Reinigung halogenhaltiger Schadstoffe, insbesondere zur Reinigung chlor- und/oder fluorhaltiger Abgase aus Anlagen zum plasmachemischen Ätzen von Halbleiterwerkstoffen, bestehend aus einer zwischen einem Plasmareaktor und dessen Vakuumpumpsystem angeordneten rohrförmigen Reaktionskammer mit Gasein- und Gasauslaßöffnungen sowie einem innerhalb der Reaktionskammer angeordneten heizbaren Feststoffkörper, gekennzeichnet dadurch, daß der Feststoffkörper (7) als axial einseitig verschlossener Hohlkörper ausgebildet und im Gasstrom innerhalb der Reaktionskammer (1) angeordnet ist, daß innerhalb des Feststoffkörpers (7) eine Heizeinrichtung (9) vorgesehen ist, daß der Feststoffkörper (7) von einem Strahlenschutz (6) und einem Stützkörper (5) umgeben ist, daß wenigstens eine Rohrleitung (11.2) für ein Spülgas (11) und wenigstens eine Rohrleitung (12.1) für ein Reaktionsgas (12) vorgesehen sind, daß ferner die Reaktionskammer (1) mit einer Kühleinrichtung versehen, und daß die Gaseinlaßöffnung axial und die Gasauslaßöffnung radial angeordnet ist.

2. Vorrichtung nach Anspruch 1, gekennzeichnet dadurch, daß der als Boden (1.1) ausgebildete, verschlossene Teil des Feststoffkörpers (7) der inneren Öffnung des Gaseinlaßstutzens (2.1) zugeordnet und der offene Teil des Feststoffkörpers (7) in einem Abstand von dem Flanschdeckel (10) angeordnet ist, daß der Feststoffkörper (7) mittels innerer Stützen (8) mit einem rohrförmigen Strahlenschutz (6) abstandsweise abgeschirmt ist und der Feststoffkörper (7) und der Strahlenschutz (6) mittels äußerer Stützen (8.1) innerhalb des rohrförmigen Stützkörpers (5) in einem Abstand parallel zu diesem angeordnet sind, wobei der Stützkörper (5) mit seiner einen Stirnseite am Boden (1.1) der Reaktionskammer (1) befestigt ist.

3. Vorrichtung nach Anspruch 1 und 2, gekennzeichnet dadurch, daß die Heizeinrichtung (9) am Flanschdeckel (10) befestigt und mit diesem aus dem bzw. in den Feststoffkörper (7) bewegbar ist.

4. Vorrichtung nach Anspruch 1 und 2, gekennzeichnet dadurch, daß die Reaktionskammer (1) doppelwandig ausgebildet ist und wenigstens je einen Stutzen (4; 4.1) zur Zu- und Abführung eines Kühlmediums aufweist.

5. Vorrichtung nach Anspruch 4, gekennzeichnet dadurch, daß die Reaktionskammer (1) einwandig ausgebildet ist und eine Kühleinrichtung aufweist, die wendelförmig um die Wandung der Reaktionskammer (1) angeordnet und mit Mitteln zur Zu- und Abführung des Kühlmediums versehen ist.

6. Vorrichtung nach Anspruch 1 und 2, gekennzeichnet dadurch, daß der Feststoffkörper (7) zur Reinigung chlorhaltiger Abgase aus Eisen besteht.

7. Vorrichtung nach den Ansprüchen 1, 2 und 6, gekennzeichnet dadurch, daß der Feststoffkörper (7) zur Reinigung fluorhaltiger Abgase aus Quarzglas besteht.

8. Vorrichtung nach den Ansprüchen 1, 2, 6 und 7, gekennzeichnet dadurch, daß die Öffnung (11.1) der Rohrleitung (11.2) innerhalb des Feststoffkörpers (7) angeordnet ist, wobei die Rohrleitung (11.2) mit einer Einrichtung zur Zuführung eines Spülgases (11) verbunden ist.

9. Vorrichtung nach Anspruch 8, gekennzeichnet dadurch, daß als Spülgas (11) Argon oder Stickstoff in den Innenraum des Feststoffkörpers (7) einleitbar ist.

10. Vorrichtung nach Anspruch 1 und 2, gekennzeichnet dadurch, daß im Bereich des Gaseinlaßstutzens (2.1) die Rohrleitung (12.1) vorgesehen ist, die mit Mitteln zur Zuführung eines Reaktionsgases verbunden ist.

11. Vorrichtung nach Anspruch 1, 2 und 10, gekennzeichnet dadurch, daß als Reaktionsgas (12) Sauerstoff eingesetzt ist.

12. Vorrichtung nach den Ansprüchen 1 bis 5, gekennzeichnet dadurch, daß der Abgasstutzen (3.1) an einer der Gasauslaßöffnung (15) entfernten Position angeordnet ist.

- Hierzu 1 Blatt Zeichnungen -

4 8.1 8 7 6 5 1.1 12 12.1

11

11.2

2.1

12

11.1

2

9

15

10

13

14

1

3 3.1

4.1

0166846